# EUROPEAN PATENT APPLICATION

(11) **EP 4 625 986 A1**
(43) Date of publication of application: **01.10.2025**
(21) Application number: 24778106.5
(22) Date of filing: 28.03.2024
(51) Int. Cl.: H04N 19/426

(54) **IMAGE PROCESSING METHOD BASED ON SYSTEM CACHE, AND RELATED APPARATUS**

(30) Priority: 30.03.2023 CN 202310378858
(71) Applicant: Huawei Technologies Co., Ltd., Shenzhen, Guangdong 518129 (CN)
(72) Inventor: LIU, Xilong, Shenzhen, Guangdong 518129 (CN)
(74) Representative: Grünecker Patent- und Rechtsanwälte PartG mbB
(86) International application number: PCT/CN2024/084276
(87) International publication number: WO 2024/199320

(57) **Abstract**

This application discloses a system cache-based image processing method. After receiving an input for displaying a specified image, an electronic device reads compressed image data of the specified image from an external memory, decompresses and decodes the compressed image data of the specified image, to obtain the image data of the specified image in a first data format. The electronic device processes the image data of the specified image in the first data format to obtain the image data of the specified image whose data format is a second data format. Storage space occupied by the image data in the second data format is less than storage space occupied by the image data in the first data format. In this way, because the image data in the second data format occupies small storage space, the electronic device may directly use a system cache to transmit the image data of the specified image. In addition, because each hardware module of the electronic device supports processing of the image data in the second data format, data format conversion does not need to be performed on the image data by a CPU and a GPU.

## Description

This application claims priority to Chinese Patent Application No. 202310378858.0, filed with the China National Intellectual Property Administration on March 30, 2023 and entitled "SYSTEM CACHE-BASED IMAGE PROCESSING METHOD AND RELATED APPARATUS", which is incorporated herein by reference in its entirety.

### TECHNICAL FIELD

This application relates to the field of terminals, and in particular, to a system cache-based image processing method and a related apparatus.

### BACKGROUND

When an electronic device receives an input of a user to display an image, the image can be displayed on a display only after a plurality of hardware modules of the electronic device collaboratively process image data. Because the image data has a large data amount and occupies a large amount of storage space, the image data needs to be forwarded through a memory when being transmitted between the hardware modules. Consequently, image data transmission is inefficient and time-consuming.

### SUMMARY

This application provides a system cache-based image processing method and a related apparatus, so that after receiving an input for displaying a specified image, an electronic device reads compressed image data of the specified image from an external memory, and decompresses and decodes the compressed image data of the specified image, to obtain image data of the specified image whose data format is a first data format. The electronic device processes the image data of the specified image in the first data format to obtain the image data of the specified image whose data format is a second data format. Storage space occupied by the image data in the second data format is less than storage space occupied by the image data in the first data format. In this way, because the image data in the second data format occupies small storage space, the electronic device may directly use a system cache to transmit the image data of the specified image. This improves efficiency of transmitting the image data by the electronic device. In addition, because each hardware module of the electronic device supports processing of the image data in the second data format, data format conversion does not need to be performed on the image data by a CPU and a GPU.

According to a first aspect, this application provides a system cache-based image processing method, applied to an electronic device, where the electronic device includes a central processing unit CPU, a graphics processing unit GPU, and a system cache SC, and the method includes: The electronic device receives an input for displaying a first image; in response to the input for displaying the first image, the electronic device obtains first data of the first image in a first data format; the electronic device divides the first data into a plurality of data tiles by using the CPU, where each data tile includes data of x*y pixels in the first data; the electronic device compresses the plurality of data tiles to obtain second data in a second data format; the electronic device transmits the second data from the CPU to the GPU by using the SC; the electronic device renders the first image based on the second data by using the GPU; and the electronic device displays the first image. In this way, the electronic device represents image data of a specified image in the second data format, thereby reducing a data amount of the image data, so that the electronic device directly uses the system cache to transmit the image data of the specified image. This improves efficiency of transmitting the image data by the electronic device. In addition, because each hardware module of the electronic device supports processing of the image data in the second data format, data format conversion does not need to be performed on the image data by the CPU and the GPU.

In a possible implementation, that the electronic device obtains first data in a first data format specifically includes: In response to the first input, the electronic device obtains raw data from a read-only memory ROM of the electronic device by using the CPU, where the raw data is compressed data of the first image; and the electronic device decompresses and decodes the raw data by using the CPU, to obtain the first data.

In a possible implementation, the obtaining raw data from a ROM by using the CPU specifically includes: The electronic device reads the raw data from the ROM into a memory of the electronic device by using the CPU, where the memory is further configured to store the first data. In this way, the electronic device reads the raw data from the ROM to the memory, so that the electronic device processes the raw data to obtain the first data.

In a possible implementation, that the electronic device transmits the second data from the CPU to the GPU by using the SC specifically includes: determining whether a data amount of the second data is less than or equal to a transmission data amount threshold of the SC; and in response to that the data amount of the second data is less than or equal to the transmission data amount threshold of the SC, transmitting, by the SC, the second data to the GPU. In this way, the electronic device may determine, based on the data amount of the second data and the transmission data amount threshold of the system cache, whether the system cache supports transmission of the second data. The electronic device transmits the second data by using the system cache only when the system cache supports the transmission of the second data, to avoid data overflow.

In a possible implementation, the data tile includes a first data block and a second data block, the first data block includes a value of a Y component of a pixel, and the second data block includes a value of a U component and a value of a V component of the pixel. In this way, the electronic device separately places different components, so that the electronic device reduces data amounts of the U component and the V component.

In a possible implementation, that the electronic device divides the first data into a plurality of data tiles by using the CPU specifically includes: The electronic device obtains one U value based on values of U components of every four adjacent pixels in the first data, and uses the U value as the values of the U components of the four pixels; the electronic device obtains one V value based on values of V components of every four adjacent pixels of the first image, and uses the V value as the values of the V components of the four pixels; and the electronic device divides data of every x*y pixels in the first data to obtain one data tile. In this way, the electronic device reduces 3/4 of the data amounts of the U component and the V component, to reduce storage space occupied by the image data.

In a possible implementation, a size of the first image corresponding to the raw data is a first size, and the method further includes: before the electronic device transmits the second data from the CPU to the GPU by using the SC, the electronic device processes the second data, and adjusts the size of the first image from the first size to a second size. That the electronic device displays the first image specifically includes: The electronic device displays the first image of the second size. In this way, when the electronic device displays, by using the second size, the image whose original size is the first size, according to the system cache-based image processing method, the image whose size is changed can be quickly decoded and rendered, and the first image of the second size does not need to be buffered. This reduces time for displaying the first image by the electronic device.

In a possible implementation, an encoding format of the first data is YUV, and an encoding format of the plurality of data tiles is YUV420. In this way, a data amount of the plurality of data tiles is less than a data amount of the first data.

In a possible implementation, x is greater than 100, and y is greater than 100.

In a possible implementation, x is equal to 512, and y is equal to 512. In this way, because values of x and y are large, the electronic device may convert the first data into the second data with a small and accurate data amount. The second data may be a framebuffer, or the second data is texture data that can be identified by the GPU. The GPU may directly perform rendering based on the second data to obtain a surface, and display the surface on a display.

According to a second aspect, this application provides an electronic device, including a processor and a storage. The storage is coupled to the processor, the storage is configured to store computer program code, the computer program code includes computer instructions, and when the processor executes the computer instructions, the electronic device is enabled to perform the system cache-based image processing method according to any possible implementation of first aspect.

According to a third aspect, an embodiment of this application provides a computer storage medium, including computer instructions. When the computer instructions are run in an electronic device, the electronic device is enabled to perform the system cache-based image processing method according to any possible implementation of first aspect.

According to a fourth aspect, an embodiment of this application provides a computer program product. When the computer program product is run on a computer, the computer is enabled to perform the system cache-based image processing method according to any possible implementation of first aspect.

According to a fifth aspect, an embodiment of this application provides a chip, including a processing circuit and an interface circuit. The interface circuit is configured to receive code instructions and transmit the code instructions to the processing circuit, and the processing circuit is configured to run the code instructions to perform the system cache-based image processing method according to any possible implementation of first aspect.

### BRIEF DESCRIPTION OF DRAWINGS

FIG. 1 is a schematic flowchart of transmitting image data by hardware modules of an electronic device according to an embodiment of this application;
FIG. 2 is a schematic flowchart of a system cache-based image processing method according to an embodiment of this application;
FIG. 3 is a diagram of image compression according to an embodiment of this application;
FIG. 4 is a schematic flowchart of processing image data by an electronic device according to an embodiment of this application;
FIG. 5 is another schematic flowchart of transmitting image data by hardware modules of an electronic device according to an embodiment of this application; and
FIG. 6 is a diagram of a hardware structure of an electronic device according to an embodiment of this application.

### DESCRIPTION OF EMBODIMENTS

The following clearly describes technical solutions of embodiments in this application with reference to accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In the following, the terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

In a possible implementation, after receiving an input of a user for displaying a specified image, an electronic device may read image data of the specified image from a non-volatile memory like a read-only memory (read-only memory, ROM) into a memory. The memory may be a random access memory (random access memory, RAM). For example, the memory may be a double data rate synchronous dynamic random access memory (double data rate synchronous dynamic random access memory, DDR SDRAM/DDR). Then, a central processing unit (central processing unit, CPU) of the electronic device may read the data of the specified image from a memory, and process the data of the specified image. The electronic device may transmit processed data of the specified image to a graphics processing unit (graphics processing unit, GPU). The GPU may render the specified image based on the processed data of the specified image. The data that is of the specified image and that is stored in the read-only memory of the electronic device is data that is of the specified image and that is obtained after compression processing is performed according to an image compression algorithm (for example, a JPEG compression algorithm). The processing, by the electronic device, the image data may include but is not limited to decompressing an image, decoding an image, resizing an image, and the like.

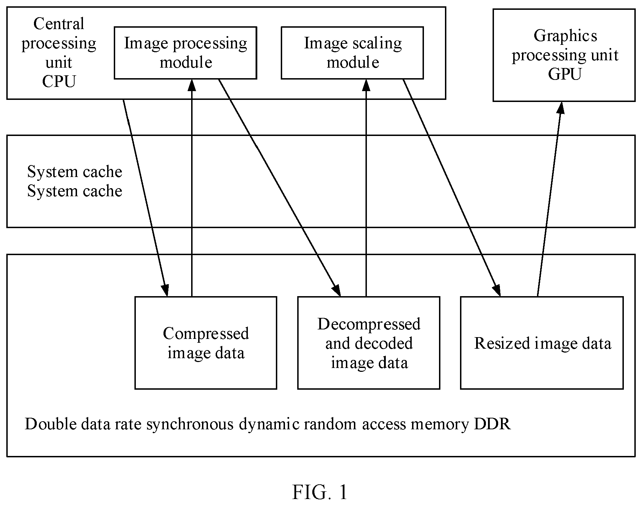

For example, a process of transmitting the data of the specified image between hardware modules of the electronic device is shown in FIG. 1. A CPU of the electronic device reads the compressed image data of the specified image from the read-only memory to the memory. The CPU of the electronic device may include an image data processing module like an image processing module and an image scaling module. The image processing module may be configured to decompress the compressed image data. The image scaling module may be configured to adjust the image size. Herein, the CPU of the electronic device may transmit the compressed image data of the specified image to the image processing module through a system cache (system cache, SC) and the DDR. The image processing module may decompress and decode the compressed image data of the specified image, to obtain the decompressed and decoded image data of the specified image. The image scaling module may obtain, based on the decompressed and decoded image data provided by the image processing module, the image data of the specified image whose image size is adjusted. In some examples, the image processing module may be a joint photographic experts group IP core (joint photographic experts group intellectual property core, JPG IP). The image scaling module may be a scaler IP core (scaler intellectual property core, SCALER IP). It should be noted that the electronic device including the image processing module and the image scaling module is merely an example, and the electronic device may include more or fewer modules to implement a function of processing image data.

Then, the CPU of the electronic device may send the processed image data of the specified image to the GPU through the memory. The GPU may render the specified image based on the processed image data. The electronic device may display the specified image on a display after the specified image is rendered.

In some examples, the electronic device usually represents the decompressed and decoded image data in an RGBA data format. The image data in the RGBA data format may include information about all pixels that form the image. A value of an RGB channel of a pixel indicates information of the pixel in RGB color space, and a value of an alpha channel of the pixel indicates transparency of the pixel. The image data of the specified image includes RGBA information of all pixels that form the specified image. The electronic device may store the image data of the specified image in a linear storage manner. For example, for the data that is of the specified image and that is stored in the electronic device, refer to a table shown in Table 1.

**Table 1 Image data in an RGBA encoding format**

| | | | | |
|---|---|---|---|---|
| pixel_0_0_RGBA | pixel_1_0_RGBA | pixel_2_0_RGBA | pixel_3_0_RGBA | ... |
| pixel_0_1_RGBA | pixel_1_1_RGBA | pixel_2_1_RGBA | pixel_3_1_RGBA | ... |
| pixel_0_2_RGBA | pixel_1_2_RGBA | pixel_2_2_RGBA | pixel_3_2_RGBA | ... |
| pixel_0_3_RGBA | pixel_1_3_RGBA | pixel_2_3_RGBA | pixel_3_3_RGBA | ... |
| pixel_0_4_RGBA | pixel_1_4_RGBA | pixel_2_4_RGBA | pixel_3_4_RGBA | ... |
| ... | ... | ... | ... | ... |

As shown in Table 1, each cell in Table 1 represents one pixel of the specified image. Each table includes values of four RGBA channels obtained by the pixel. In this way, the electronic device may generate and display the specified image based on information about each pixel in Table 1.

In conclusion, the electronic device uses the RGBA data format to represent the image data. As a result, the image data occupies excessive storage space. New data is also generated in an image processing process of the electronic device, so that the electronic device needs to allocate larger storage space to store the data. In this way, when the image data is transmitted between the hardware modules of the electronic device, because there is excessive image data, each hardware module copies obtained data to the memory, which is more time-consuming. A scenario shown in FIG. 1 is used as an example. When the electronic device processes the image data of the specified image, the image data may start from the CPU, pass through the DDR and the SC, and arrive at the image processing module. Then, the image data is sent to the image scaling module through the DDR, and arrives at the GPU through the DDR. In the entire procedure, each IP core copies the image data to its own storage space, and consequently, a plurality of copies of redundant data are generated, so that data of one image is copied at least three times. Because representation formats of image data in the CPU and the GPU are different, after the GPU receives image data sent by the CPU, the GPU further converts a format of the image data, and then can process the image data. For example, when the electronic device loads an image of a size of 2048*2048, about 270 ms is consumed, and storage space of about 32 MB needs to be occupied. It takes 44 ms for the electronic device to decode the image, 17 ms for changing the size of the image, 28 ms for the GPU to process the image, and 181 ms for the GPU to convert a data format.

Based on the foregoing example, embodiments of this application provide a system cache-based image processing method. After receiving an input for displaying a specified image, an electronic device may read compressed image data of the specified image from an external memory. The electronic device may decompress and decode the compressed image data of the specified image, to obtain the image data of the specified image whose data format is a first data format. Then, the electronic device may process the image data of the specified image in the first data format, to obtain the image data of the specified image whose data format is a second data format. The second data format is different from the first data format, and storage space occupied by the image data in the second data format is less than storage space occupied by the image data in the first data format. The electronic device may directly transmit the image data in the second data format by using a system cache. Each hardware module of the electronic device supports processing of the image data in the second data format. In this way, the electronic device represents the image data of the specified image in the second data format, thereby reducing a data amount of the image data, so that the electronic device may directly use the system cache to transmit the image data of the specified image. This improves efficiency of transmitting the image data by the electronic device. In addition, because each hardware module of the electronic device supports processing of the image data in the second data format, data format conversion does not need to be performed on the image data by a CPU and a GPU.

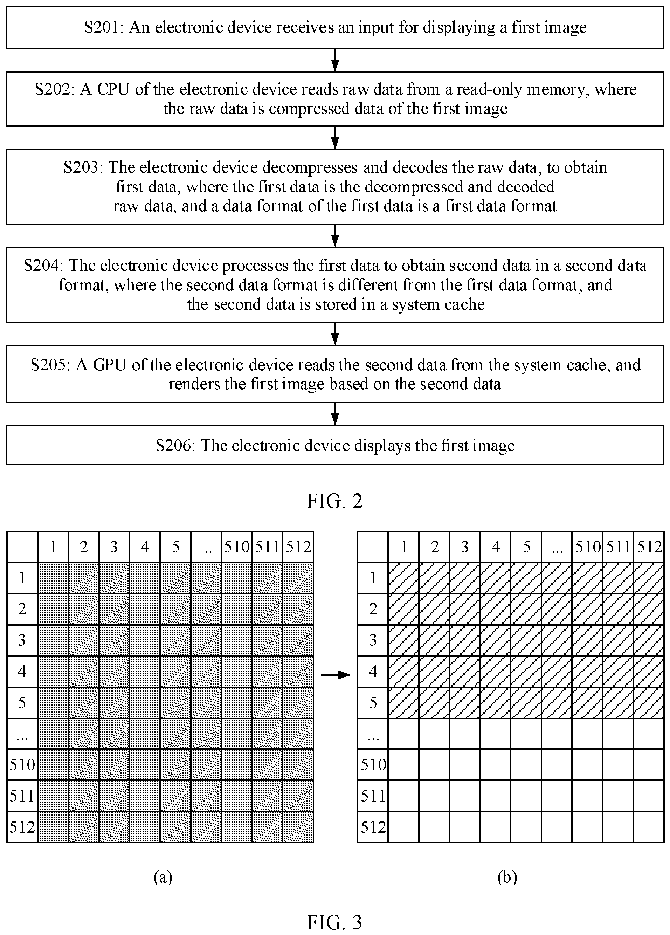

Specifically, as shown in FIG. 2, specific steps of the system cache-based image processing method are as follows:
S201: The electronic device receives an input for displaying a first image.

The input may be not limited to tap, double tap, touch and hold, slide, a voice instruction input, or the like.

S202: The CPU of the electronic device reads raw data from a read-only memory, where the raw data is compressed data of the first image.

The CPU of the electronic device may read the raw data from the read-only memory (for example, a hard disk). The electronic device may read the raw data into a memory (for example, a DDR).

In some examples, the electronic device may read a part (for example, 70%) of the raw data into the system cache, and read the other part (for example, 30%) of the raw data into the memory. In this way, when transmitting the raw data to an image processing module, the electronic device may transmit 70% of the raw data to the image processing module by using the system cache, and transmit 30% of the raw data to the image processing module by using the memory. This improves a data transmission rate.

S203: The electronic device decompresses and decodes the raw data, to obtain first data, where the first data is the decompressed and decoded raw data, and a data format of the first data is the first data format.

The electronic device may decompress and decode the raw data by using the image processing module (for example, a JPEG IP), to obtain the first data.

S204: The electronic device processes the first data to obtain the second data in the second data format, where the second data format is different from the first data format, and the second data is stored in the system cache.

Specifically, the electronic device first performs a tiling operation on the first data, and then compresses tiled first data, to obtain the second data in the second data format.

The electronic device performs the tiling operation on the first data, to divide the first data into one or more data tiles (tiles) of a specified size. Each data tile in the one or more data tiles includes information about a specified quantity of pixels of the first image. The specified size may indicate a quantity of pixels included in each data tile, namely, the specified quantity. In embodiments of this application, the data tile of the specified size may be referred to as a large tile. In some examples, the specified quantity is x*y, where x is greater than 100, and y is greater than 100.

The specified size is greater than a size of a data tile in an RGBA encoding format. For example, the size of the data tile in the RGBA encoding format is 16px*16px or 32px*8px. The data tile in the RGBA encoding format may be referred to as a small tile. For example, the specified size may be 512px*512px. In this way, because the specified size of the data tile of the first data is large, information about more pixels is included, and more redundant information is included, to help the electronic device compress the large tile.

Optionally, before tiling the first data, or after tiling the first data, the electronic device may further compress some information about a pixel. For example, if the first data uses a YUV data encoding format to represent information about each pixel, a Y value represents luminance of the pixel, and U and V values represent chrominance of the pixel, in a tiling process, the electronic device may reserve a Y component of each pixel, and compress U components and V components of every four adjacent pixels. Specifically, the electronic device may obtain one U value based on values of the U components of every four adjacent pixels, and use the U value as the values of the U components of the four pixels. Similarly, the electronic device may obtain one V value based on values of the V components of every four adjacent pixels, and use the V value as the values of the V components of the four pixels. It should be noted that the value obtained through calculation (for example, the U value or the V value) may be an average value, a maximum value, a minimum value, an intermediate value, or the like. This is not limited in embodiments of this application.

It should be further noted that the four adjacent pixels may be four pixels arranged horizontally, or four pixels arranged vertically, or four pixels arranged in a " 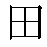 " shape. This is not limited in embodiments of this application. In this way, one pixel in the first data corresponds to one Y component, the values of the U components of every four adjacent pixels in the first data are the same, and the values of the V components of every four adjacent pixels are also the same. The electronic device only needs to retain the value of the U component of one of the four pixels and the value of the V component of one of the four pixels. Therefore, every four pixels in the first data jointly correspond to one U component, and every four pixels in the first data jointly correspond to one V component. For each pixel, a Y component occupies one channel, and U and V components jointly occupy 0.5 channels. A ratio of the Y component to the U component to the V component in the first data is equal to 4: 1: 1, so that 1/2 of a data amount of the first data of the electronic device is reduced.

Then, the electronic device may compress the tiled first data, to obtain the second data in the second data format. For example, the electronic device may process the tiled first data by using a data compression technology, to obtain the second data. For example, the data compression technology may be an ARM framebuffer compression (arm framebuffer compression, AFBC) technology. The electronic device may process the first data by using the image processing module, to obtain the second data.

For example, an example in which the specified size is 512*512 is used to describe the step in which the electronic device processes the first data to obtain the second data in the second data format. The first data format is a YUV data format. The first data in the first data format includes YUV information of all pixels of the first image. The electronic device may tile the first data, and the tiled first data is shown in Table 2.

**Table 2 Tiled first data**

| Plane0 | | | | |
|---|---|---|---|---|
| tliel_512*512_Y | | | | |
| Y1_1 | Y1_2 | ... | ... | Y1_512 |
| Y2_1 | Y2_2 | ... | ... | Y2_512 |
| ... | ... | ... | ... | ... |
| Y512 1 | ... | ... | ... | Y512_512 |

| til2_512*512_Y | | | | |
|---|---|---|---|---|
| ... | ... | ... | ... | ... |

| Plane1 | | | | |
|---|---|---|---|---|
| tliel _512*512_UV | | | | |
| U1_1 | V1_1 | ... | U1_256 | V1_256 |
| ... | ... | ... | ... | ... |
| U256_1 | V256_1 | ... | U256_256 | V256_256 |

| tile2_512*512_UV | | | | |
|---|---|---|---|---|
| ... | ... | ... | ... | ... |

As shown in Table 2, the tiled first data includes two data blocks plane0 and plane1. Plane0 is used to store a Y component, and plane1 is used to store a U component and a V component. The electronic device includes a plurality of tiles, and each of the plurality of tiles may include tile 1 and tile 2. Each tile includes information about 512*512 pixels. It should be noted that Table 2 is merely an example, and the tiled first data that is actually obtained by the electronic device may be represented in another form (for example, an array). This is not limited in embodiments of this application.

Then, the electronic device may compress the tiled first data to obtain the second data in the second data format. For example, (a) in FIG. 3 may represent plane0 in the tiled first data, and gray boxes may represent Y component data. After compressing the data shown in (a) in FIG. 3, the electronic device may obtain data shown in (b) in FIG. 3. Herein, (b) in FIG. 3 may represent plane0 in the second data. Stripe boxes may represent valid data, and white boxes may represent invalid data. It can be learned from FIG. 3 that, after compressing the tiled first data, the electronic device may centralize valid data in the Y component, the U component, and the V component, to further reduce the data amount of the image data of the first image.

In some examples, the valid data is a non-zero value, and the invalid data is a zero value. It may be understood that only plane0 is used as an example herein, and the electronic device also compresses data in plane1.

In this way, because the electronic device compresses the tiled first data, the valid data of the Y component, the U component, and the V component in the first data is centralized together, and invalid data is also centralized together. During image data transmission, the electronic device may transmit only a valid data part, to reduce the data amount of the image data and improve image processing efficiency.

In addition, in comparison with a processing method in which the first data is divided into small tiles and compression processing is performed based on the small tiles, in this embodiment of this application, large tiles are compressed, and same information between different large tiles is less, so that redundant information in the compressed image data is less, storage space occupied by the compressed image data is smaller, and a compression rate is high.

The electronic device obtains the compressed image data based on the large tiles, so that a compression rate of an image can be improved and storage space can be reduced while information is relatively complete. In addition, because both the CPU and the GPU can directly process image data of the large tile, processing is easier. When the electronic device displays an image corresponding to the compressed image data, because a data amount of the compressed image data is small, the CPU may directly transmit the compressed image data to the image processing module by using the system cache, to increase an image transmission rate.

It should be noted that a size of the data tile may determine a size of storage space occupied by compressed data and image processing time required by the GPU to process the image. A smaller data tile indicates a lower compression rae, larger storage space occupied by the compressed data, longer data transmission time, and shorter image processing time required for processing the image by the GPU. A larger data tile indicates a higher compression rate, smaller storage space occupied by the compressed data, shorter data transmission time, and longer image processing time required for processing the image by the GPU. Therefore, an optimal size of the data tile may be determined based on the image processing time and the data transmission time. When the data tile is of the optimal size, a sum of the image processing time and the data transmission time is the smallest.

In some examples, it may be learned through experiments that the specified size is 512px*512px, both image processing time and data transmission time are short, and 512px*512px is used as the size of the large tile.

In some other examples, the size of the large tile may alternatively be 256px*256px, or 1024px*1024px.

In this way, because the data format of the second data is the second data format, the data amount of the first image is reduced, and the electronic device does not need to transmit data in a DDR copy manner. In addition, because the data amount of the second data is small, when the second data is transmitted between different hardware modules (for example, between different IP cores, or between an IP core/CPU and a GPU) of the electronic device, the second data may be transmitted by using the system cache, to shorten time consumed for data transmission. For example, the electronic device uses the second data format to represent the second data, so that the data amount of the second data may be less than a data amount threshold, where the data amount threshold may be queried by using a model of a processor. In some application scenarios, the data amount threshold may be 8 MB.

In some examples, due to universality of the second data format, each IP core, GPU, and system on chip (system on chip, SoC) unit can identify (or read) image data in the second data format. After receiving the image data in the second data format, these hardware modules directly process the image data.

In some examples, because each hardware module of the electronic device may process data in the second data format, the electronic device may perform hardware accelerated decoding (hardware decoding for short) on image data, to implement an image processing operation by using a dedicated decoding circuit that is built in hardware (for example, JPG IP or SCALER IP). In this way, in comparison with software accelerated decoding (to be specific, decoding on an image by a CPU is implemented through software programming), processing efficiency is improved, and optimization of scenarios such as cross-IP image data transmission and video frame transmission is further implemented.

In some examples, after obtaining the second data, the electronic device may further process the second data, to change a size, a resolution, and the like of the first image. For example, the electronic device may change the size of the first image by using an image scaling module. Then, the electronic device transmits the processed second data to the GPU.

Optionally, in a process of processing the first data, the electronic device may further improve the first data in another dimension (for example, a data storage form), to reduce the data amount of the second data.

S205: The GPU of the electronic device reads the second data from the system cache, and renders the first image based on the second data.

The CPU/image processing module/image scaling module of the electronic device may transmit the second data to the GPU. In this process, because the data amount of the second data is small, the second data may directly arrive at the GPU by using the system cache, and may not pass through the DDR. After receiving the second data, the GPU may render the first image based on the second data.

It should be noted that, on a premise of large tile compression, the electronic device may convert the first data into the second data with a small and accurate data amount. The second data may be a framebuffer (framebuffer), or the second data is texture data that can be identified by the GPU. The GPU may directly perform rendering based on the second data to obtain a surface (surface), and display the surface on a display.

Because the second data includes large tiles, the electronic device uses the large tiles to implement information synchronization between the hardware modules. After the CPU processes a tile, the GPU may continue to process the tile. The CPU and GPU can perform calculation at the same time. In this way, an efficient pipeline is formed, and time for processing image data by the electronic device is reduced, so that the CPU and the GPU do not need to wait for each other during processing, thereby improving chip running efficiency.

In a possible implementation, before the CPU/image processing module/image scaling module of the electronic device transmits the second data to the GPU, the electronic device may determine whether the data amount of the second data is less than a transmission data amount threshold (for example, 8 MB) of the system cache. When the electronic device determines that the data amount of the second data is less than or equal to the transmission data amount threshold of the system cache, the CPU/image processing module/image scaling module of the electronic device may transmit the second data to the GPU by using the system cache. When the electronic device determines that the data amount of the second data is greater than the transmission data amount threshold of the system cache, the CPU/image processing module/image scaling module of the electronic device transmits the second data to the GPU by using a memory. In this way, the electronic device may determine, based on the data amount of the second data and the transmission data amount threshold of the system cache, whether the system cache supports transmission of the second data. The electronic device transmits the second data by using the system cache only when the system cache supports the transmission of the second data, to avoid data overflow.

S206: The electronic device displays the first image.

After generating the first image, the GPU may transmit the first image to the display for display.

It should be noted that the second data format and/or the image processing manner provided in embodiments of this application may be used in, not limited to a scenario in which the first image is displayed, other scenarios involving an image or a video, for example, video encoding and decoding, video frame transmission, image sharing, image downloading, and image saving, to improve processing efficiency of the electronic device.

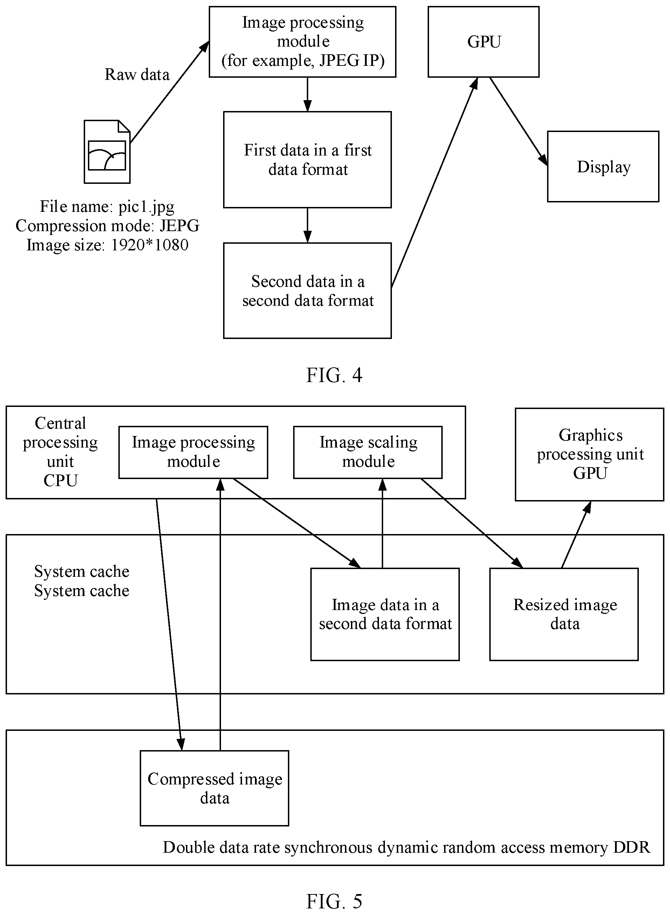

For example, as shown in FIG. 4, the electronic device stores the first image in a form of a joint photographic experts group (joint photographic experts group, JPG/JPEG) file. The size of the first image is 1920* 1080, and a compression manner is JPEG compression. In a process of displaying the first image, the electronic device may first read, from an external memory, compressed data, namely, raw data, of the first image in a file whose file name is pic1.jpg. The image processing module of the electronic device may decompress and decode the raw data, to obtain the first data in the first data format. The electronic device may process the first data to obtain the second data in the second data format.

If the first data format is the RGBA8888 data format, the size of the first data obtained by the electronic device is 1920*1080*4 bytes=8.2944 MB. The electronic device may perform large tile compression on the first data, to obtain the second data. After the large tile compression, the second data may be compressed to 1/4 to 1/8 of the first data. In embodiments of this application, the second data format may be referred to as a -RGB data format.

If the first data format is the YUV data format, the size of the first data obtained by the electronic device is 1920*1080*3 bytes=6.22 MB. The electronic device may perform large tile processing on the first data, to obtain the tiled first data. The size of the tiled first data is 3.11 MB. Then, the electronic device compresses the tiled first data, to obtain the second data. After the compression processing, the second data may be compressed to 1/4 to 1/8 of the tiled first data.

Then, the electronic device may transmit the second data to the GPU by using the system cache. The GPU may render the first image based on the second data. The electronic device may display the first image on the display.

The following describes, based on a specific scenario, the system cache-based image processing method provided in embodiments of this application.

For example, a process of transmitting data of a first image between hardware modules of an electronic device is shown in FIG. 5. The electronic device includes hardware modules such as a CPU, a GPU, a system cache (SC), and a DDR. The CPU includes one or more modules, for example, an image processing module and an image scaling module. For descriptions of the hardware modules, refer to the embodiment shown in FIG. 1. Details are not described herein again. The CPU of the electronic device reads compressed image data of a specified image from a read-only memory to the DDR. The CPU may send the compressed image data of the specified image to the image processing module by using the SC and the DDR. In some examples, the electronic device may read a part (for example, 70%) of the compressed image data into the system cache, and read the other part (for example, 30%) of the compressed image data into the DDR. When transmitting raw data to the image processing module, the electronic device may transmit 70% of the raw data to the image processing module by using the system cache, and transmit 30% of the raw data to the image processing module by using the DDR. This improves a data transmission rate.

The image processing module may decompress and decode the compressed image data of the specified image, to obtain the decompressed and decoded image data of the specified image, and process the decompressed and decoded image data to obtain the image data in a second data format. For descriptions that the electronic device obtains the image data in the second data format, refer to the embodiment shown in FIG. 2. Details are not described herein again. Then, the electronic device may send the image data in the second data format to the image scaling module by using the system cache. The image scaling module may obtain, based on the data provided by the image processing module, the image data of the specified image whose size is adjusted. A data format of the resized image data is also the second data format.

Then, the image scaling module of the electronic device may send the resized image data to the GPU by using the system cache. The GPU may render the specified image based on the processed image data. The electronic device may display the specified image.

It can be learned from a comparison between FIG. 1 and FIG. 3 that, in comparison with the scenario shown in FIG. 1, the image processing method provided in embodiments of this application can enable the electronic device to display the specified image more quickly. For example, an image whose image size is 1080* 1920 is used as an example to describe a difference between the method shown in FIG. 1 and the image processing method provided in embodiments of this application used by the electronic device to process image data.

**Table 3 Image data corresponding to different image processing methods**

| Original image size | Tile size | Encoding format | Channel quantity | Image size | Compression rate | Traffic memory |
|---|---|---|---|---|---|---|
| 1080*1920 | 16*16 | RGBA | 4 | 7.9 MB | 1 | 15.8 MB |
| 1080*1920 | 512*512 | Second data format | 1.5 | 2.9 MB | 0.5 | 1.8 MB |

It can be learned from Table 3 that a size of an original image is 1080*1920. When the image is transmitted in the RGBA encoding format, a quantity of data channels is 4, and the tile size is 16*16. After the electronic device performs processing such as tiling on the original image, the size of the image is 7.9 MB, the compression rate of the image is 1, and the traffic memory is 15.8 MB. The traffic memory indicates a size of storage space occupied in the system cache when the image data is transmitted. Because the compression rate of the image is 1, when transmitting the image data in the RGBA encoding format, the electronic device still transmits data of four channels, and occupied storage space in the system cache is 7.9*2=15.8 MB.

When the image is transmitted in the second data format, a quantity of data channels is 1.5, and the tile size is 512*512. After the electronic device performs processing such as tiling on the original image, the size of the image is 2.9 MB, the compression rate of the image is 0.5, and the traffic memory is 1.8 MB. Because the compression rate of the image is 0.5, and because an arrangement manner of the image data in the second data format is also different from an arrangement manner of the image data in the RGBA encoding format, the data amount of the image data is further reduced. Therefore, the image data in the second data format may be transmitted by using the system cache. When the image data is transmitted to the system cache, there may be 1/3 of the data size, that is, an occupied memory is 2.9/3≈0.96 MB. The system cache needs to allocate memory space of 2.9/3*2≈1.8 MB for the image data.

In conclusion, the memory space occupied in the system cache by the system cache-based image processing method provided in embodiments of this application is only 1/8 of the memory space occupied in the system cache in the manner shown in FIG. 1. With reference to FIG. 5 and FIG. 1, it can be learned that, when each hardware module transmits image data, based on the method provided in embodiments of this application, some images with a large data amount may still be forwarded by using the system cache without occupying DDR space, thereby improving the data transmission rate.

In some application scenarios, when the electronic device displays, based on a size of 900px*900px, an image whose size is 2048px*2048px and whose image size is 1.1 MB, time consumed by using different image processing methods is shown in Table 4 below.

**Table 4 Time required by the electronic device to process image data in different data formats**

| Data encoding format | Decoding manner | Decoding and rendering | | | Buffer | | Total time |
|---|---|---|---|---|---|---|---|
| | | Decoded image | Scaled image | GPU processing | Convert to PNG | Write a file | |
| RGBA | Software decoding | 44 ms | 17 ms | 28 ms | 180 ms | 1 ms | 270 ms |
| Second data format | Hardware decoding | 10 ms | | | | | 10 ms |

As shown in Table 4, in the image display process, when the encoding format of the image data of the specified image of the electronic device is RGBA, the electronic device parses the image data in the software decoding manner, decodes the image, scales the image, and renders the image, which is time-consuming. In addition, because a data amount of an image is large, data needs to be transmitted through the DDR, and transmission takes a long time. Therefore, the electronic device needs to take more time to display the image. When the encoding format of the image data of the specified image of the electronic device is the second data format, the electronic device may parse the image data in a hard decoding manner. In addition, the data amount of the image data is small, and the data may be directly transmitted by using the system cache, so that transmission time is short. Therefore, when the electronic device decodes the image, scales the image, and renders the image by using the GPU, less time is required.

In addition, because it takes a long time for the electronic device to decode and render the image in the RGBA data encoding form, to display the image more quickly when a user opens the image again, the electronic device may convert an obtained 900px*900px image into a PNG image format, and store the image in the external memory. In this way, the electronic device needs to take 181 ms to buffer data of the 900px*900px image. However, according to the system cache-based image processing method provided in this application, an image with a changed size can be quickly obtained through decoding and rendering, and does not need to be buffered. Therefore, when the electronic device displays an image based on different sizes for the first time, when the image is displayed in the manner shown in FIG. 1, total time consumed for processing the image data is 270 ms; and when the image is displayed by using the system cache-based image processing method provided in embodiments of this application, total time consumed for processing the image data is 10 ms, thereby reducing the time consumed for processing the image data by the electronic device.

The following describes the electronic device provided in embodiments of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device. A specific type of the electronic device is not particularly limited in embodiments of this application.

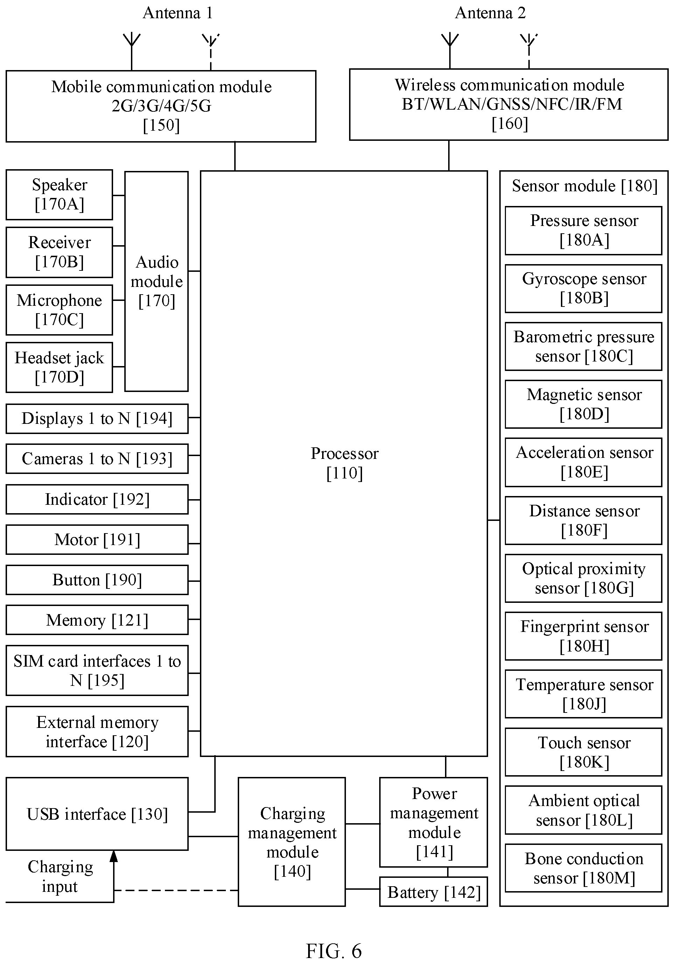

FIG. 6 is a diagram of a structure of an electronic device 100.

The electronic device may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may have more or fewer components than those shown in the figure, or have some components that are combined, or have some components that are split, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A storage may be further disposed in the processor 110, and is configured to store instructions and data. In some embodiments, the storage in the processor 110 is a cache memory. The storage may store instructions or data just used or cyclically used by the processor 110. If the processor 110 needs to use the instructions or the data again, the processor may directly invoke the instructions or the data from the storage. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charging management module 140 may further supply power to the electronic device through the power management module 141 while charging the battery 142. The power management module 141 is configured to connect to the battery 142, the charging management module 140, and the processor 110. The power management module 141 receives an input from the battery 142 and/or the charging management module 140, and supplies power to the processor 110, the memory 121, the display 194, the camera 193, the wireless communications module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to: transmit and receive electromagnetic wave signals. Each antenna in the electronic device 100 may be configured to cover one or more communications frequency bands. Different antennas may be further multiplexed to improve antenna utilization.

The mobile communication module 150 may provide a wireless communication solution that is applied to the electronic device 100 and that includes 2G, 3G, 4G, 5G, and the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The baseband processor processes the low-frequency baseband signal, and then transmits a processed signal to the application processor. The application processor outputs a sound signal by using an audio device (which is not limited to the speaker 170A, the receiver 170B, or the like), or displays an image or a video on the display 194.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function by using the GPU, the display 194, the application processor, and the like. The GPU is an image processing microprocessor, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during image shooting, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, speech recognition, and text understanding, can be implemented through the NPU.

The external memory interface 120 may be configured to connect to an external non-volatile memory, to expand a storage capability of the electronic device 100. The external non-volatile memory communicates with the processor 110 through the external memory interface 120, to implement a data storage function. For example, a file like music or a video is stored in the external non-volatile memory.

The memory 121 may be configured to store computer-executable program code, and the executable program code includes instructions. The processor 110 runs the instructions stored in the memory 121 to perform various function applications of the electronic device 100 and data processing. The memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the memory 121 may include a high-speed random access memory, and may further include a non-volatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like. The audio module 170 is configured to convert digital audio information into an analog audio signal output, and is also configured to convert an analog audio input into a digital audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal.

The pressure sensor 180Ais configured to sense a pressure signal, and may convert the pressure signal into an electrical signal. In some embodiments, the pressure sensor 180A may be disposed on the display 194. The gyroscope sensor 180B may be configured to determine a moving posture of the electronic device 100. The barometric pressure sensor 180C is configured to measure barometric pressure. The magnetic sensor 180D includes a Hall sensor, and opening and closing of a flip cover may be detected by using the magnetic sensor 180D. The acceleration sensor 180E may detect accelerations in various directions (usually on three axes) of the electronic device 100. The distance sensor 180F is configured to measure a distance. The optical proximity sensor 180G may also be configured to automatically unlock and lock a screen in a flip cover mode and a pocket mode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100, and is at a location different from that of the display 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A system cache-based image processing method, applied to an electronic device, wherein the electronic device comprises a central processing unit CPU, a graphics processing unit GPU, and a system cache SC, and the method comprises:
receiving, by the electronic device, an input for displaying a first image;
in response to the input for displaying the first image, obtaining, by the electronic device, first data of the first image in a first data format;
dividing, by the electronic device, the first data into a plurality of data tiles by using the CPU, wherein each data tile comprises data of x*y pixels in the first data;
compressing, by the electronic device, the plurality of data tiles to obtain second data in a second data format;
transmitting, by the electronic device, the second data from the CPU to the GPU by using the SC;
rendering, by the electronic device, the first image based on the second data by using the GPU; and
displaying, by the electronic device, the first image.

2. The method according to claim 1, wherein the obtaining, by the electronic device, first data in a first data format specifically comprises:
in response to the first input, obtaining, by the electronic device, raw data from a read-only memory ROM of the electronic device by using the CPU, wherein the raw data is compressed data of the first image; and
decompressing and decoding, by the electronic device, the raw data by using the CPU, to obtain the first data.

3. The method according to claim 2, wherein the obtaining raw data from a ROM by using the CPU specifically comprises:
reading, by the electronic device, the raw data from the ROM into a memory of the electronic device by using the CPU, wherein the memory is further configured to store the first data.

4. The method according to claim 1, wherein the transmitting, by the electronic device, the second data from the CPU to the GPU by using the SC specifically comprises:
determining whether a data amount of the second data is less than or equal to a transmission data amount threshold of the SC; and
in response to that the data amount of the second data is less than or equal to the transmission data amount threshold of the SC, transmitting, by the SC, the second data to the GPU.

5. The method according to any one of claims 1 to 4, wherein the data tile comprises a first data block and a second data block, the first data block comprises a value of a Y component of a pixel, and the second data block comprises a value of a U component and a value of a V component of the pixel.

6. The method according to any one of claims 1 to 5, wherein the dividing, by the electronic device, the first data into a plurality of data tiles by using the CPU specifically comprises:
obtaining, by the electronic device, one U value based on values of U components of every four adjacent pixels in the first data, and using the U value as the values of the U components of the four pixels;
obtaining, by the electronic device, one V value based on values of V components of every four adjacent pixels of the first image, and using the V value as the values of the V components of the four pixels; and
dividing, by the electronic device, data of every x*y pixels in the first data to obtain one data tile.

7. The method according to any one of claims 1 to 6, wherein a size of the first image corresponding to the raw data is a first size, and the method further comprises:
before the electronic device transmits the second data from the CPU to the GPU by using the SC, processing, by the electronic device, the second data, and adjusting the size of the first image from the first size to a second size; and
the displaying, by the electronic device, the first image specifically comprises:
displaying, by the electronic device, the first image of the second size.

8. The method according to any one of claims 1 to 7, wherein an encoding format of the first data is YUV, and an encoding format of the plurality of data tiles is YUV420.

9. The method according to any one of claims 1 to 8, wherein x is greater than 100, and y is greater than 100.

10. The method according to claim 9, wherein x is equal to 512, and y is equal to 512.

11. An electronic device, comprising a processor and a storage, wherein the storage is coupled to the processor, the storage is configured to store computer program code, the computer program code comprises computer instructions, and when the processor executes the computer instructions, the electronic device is enabled to perform the method according to any one of claims 1 to 10.

12. A computer-readable storage medium, comprising instructions, wherein when the instructions are run on an electronic device, the electronic device is enabled to perform the method according to any one of claims 1 to 10.

13. A chip, wherein the chip comprises a processing circuit and an interface circuit, the interface circuit is configured to receive code instructions and transmit the code instructions to the processing circuit, and the processing circuit is configured to run the code instructions to perform the method according to any one of claims 1 to 10.
